# EUROPÄISCHE PATENTSCHRIFT

(11) **EP 4 015 869 B1**
(45) Veröffentlichungstag und Bekanntmachung des Hinweises auf die Patenterteilung: **01.01.2025**
(21) Anmeldenummer: 22156572.4
(22) Anmeldetag: 07.01.2021
(51) Int. Cl.: F16G 13/20

(54) **MIT EINEM KETTENANTRIEB BETÄTIGBARE SCHIEBESTEIFE SCHUBKETTE**
PUSH RESISTANT THRUST CHAIN ACTUATED WITH CHAIN TRANSMISSION
CHAÎNE DE POUSSÉE RIGIDE AU GLISSEMENT ACTIONNABLE PAR UN ENTRAÎNEMENT À CHAÎNE

(30) Priorität: 10.01.2020 DE 102020200266
(43) Veröffentlichungstag der Anmeldung: 22.06.2022
(62) Teilanmeldung aus: 21150574.8
(73) Patentinhaber: K+G Pneumatik GmbH, 52249 Eschweiler (DE)
(72) Erfinder: Maul, Hans-Erich, verstorben (DE); Kohler, Franz, 52249 Eschweiler (DE); Urbansky, Christof, 52379 Langerwehe (DE)
(74) Vertreter: Tergau & Walkenhorst Intellectual Property GmbH

(56) Entgegenhaltungen:
- EP-A1- 3 404 290
- EP-B1- 1 747 386
- DE-U1- 202014 009 371
- US-B2- 7 201 687

## Beschreibung

Die Erfindung betrifft eine mit einem Kettenantrieb betätigbare schiebesteife Schubkette.

Derartige Schubketten sollen Schubkräfte zumindest über einen Schubkettenabschnitt geradlinig übertragen, ohne in einer Richtung quer zu der Schubrichtung abzuknicken und als Gegenmaßnahme einer aufwendigen Führung zu bedürfen.

Andererseits sollen solche Schubketten in einer vorgegebenen Umlenkposition mit möglichst geringem Krafteinsatz umgelenkt werden, um anschließend in einer anderen linearen Schubrichtung zu verlaufen. Die Umlenkposition der Schubkette ist insbesondere auch deren Antriebsposition, in der ein Kettenrad eines Kettenantriebs in die Schubkette eingreift.

Solche Schubketten werden beispielsweise zur Betätigung von Fenstern, Türen, Klappen und Lichtkuppeln, insbesondere in RWA-Anlagen in Gebäuden, eingesetzt. Grundsätzlich sind alle möglichen linearen Schub- und Zugbewegungen an Öffnungs- oder Schließelementen, Hebe- oder Senkvorrichtungen zur Veränderung der Position der zu betätigenden Einrichtung möglich.

Eine bekannte Schubkette, die den vorstehenden Anforderungen weitgehend genügt, ist aus EP 3 404 290 A1 bekannt. Die einzelnen Kettenglieder sind durch Bolzen, die an ihren überstehenden Enden durch Muttern und/oder Überwurfringe in ihrer axialen Lage fixiert sind, gegeneinander schwenkbar zusammengehalten. Dadurch ist die Bauform der Schubkette relativ breit. Des Weiteren sind die Zahnsegmentscheiben zum Teil mit aus der Scheibenebene abstehenden Nocken versehen, die im gestreckten Zustand als Endanschlag zur Verhinderung einer Überstreckung dienen. Dadurch ist der Fertigungsaufwand relativ groß.

Der vorliegenden Erfindung liegt die Aufgabe zugrunde, die Teile der Kettenglieder der Schubkette so auszubilden, dass bei möglichst hoher Stabilität und guter Kraftübertragung bei zugleich guter Umlenkbarkeit und ruhigen Laufeigenschaften eine möglichst schmale Bauform verwirklicht werden kann. Darüber hinaus ist ein Ziel, dass die Fertigung weiter vereinfacht wird und die Schubkette möglichst kostengünstig herzustellen ist.

Zur Lösung dieser Aufgabe geht die Erfindung von einer mit einem Kettenantrieb betätigbaren Schubkette mit den Merkmalen des Anspruchs 1 aus.

Demnach betrifft die Erfindung eine mit einem Kettenantrieb betätigbare schiebesteife Schubkette, die ein aus Zahnsegmentscheiben zusammengesetztes Innenteil, ein aus Zahnsegmentscheiben zusammengesetztes Zwischenteil und ein aus Kettenzugankern zusammengesetztes Außenteil aufweist, wobei das Zwischenteil das Innenteil sandwichartig umgibt und das Außenteil das Zwischenteil sandwichartig umgibt, und wobei die Zahnsegmentscheiben und die Kettenzuganker fluchtende Bolzenaufnahmelöcher aufweisen und mit Hilfe von durch die Bolzenaufnahmelöcher hindurch gesteckten Bolzen miteinander verbunden sind. Die Länge der Bolzen ist erfindungsgemäß derart bemessen, dass sie nicht oder allenfalls ganz geringfügig über die seitlichen Außenflächen der Kettenzuganker hinausstehen. Vielmehr schließen die Stirnflächen der Bolzen bündig mit den Außenflächen der Kettenzuganker ab oder sind diesbezüglich sogar leicht versenkt angeordnet. Durch den Verzicht auf überstehende Teile ist eine besonders schmale Bauform realisierbar, und die Schubkette kann nicht an umliegenden Anlagenteilen oder Vorsprüngen hängenbleiben.

Um dennoch eine sichere axiale Fixierung der Bolzen ohne zusätzliche Klemm- oder Fixierungsmittel zu gewährleisten, sind die Bolzen vorteilhafterweise mit einer Presspassung unbeweglich in den Bolzenaufnahmelöchern der Kettenzuganker eingepresst (reib- bzw. kraftschlüssige Verbindung).

Diese Art der Verstellsicherung axial wie auch radial kann alternativ durch Laserschweißtechnik und/oder auch durch punktuelle Verstemmung der Lochränder der Kettenzuganker ausgeführt werden. Eine derartige Fixierung kann ggf. auch zusätzlich bzw. unterstützend zu der erwähnten Presspassung vorgesehen sein. Ebenso ist es möglich, entsprechend der Niettechnik die Lochleibung so zu wählen, dass ein sicherer Sitz des Bolzens nach der Montage gewährleistet ist.

Im Weiteren ist es ein Vorteil, die Verbindung der Zahnsegmentteile durch mechanisch reibschlüssige Verbindung der Bolzen in den Kettenzugankern deutlich kostengünstiger herstellen zu können.

Alternativ können die Bolzen durch zumindest teilweisen Formschluss gegen axiale Verschiebung gesichert in den zugeordneten Bolzenaufnahmelöchern der Kettenzuganker sitzen. Der jeweilige Bolzen kann dazu an beiden Enden mit jeweils einer Ringnut und mit einem flachen Bolzenkopf versehen sein. Bei der Montage wird der Bolzen in das zugeordnete Bolzenaufnahmeloch des Kettenzugankers hineingepresst, so dass die Ringnut in dem Bolzenaufnahmeloch sitzt, entweder mit Presspassung wie oben beschrieben oder mit Spielpassung, ggf. sogar drehbeweglich. Der Bolzenkopf wird dabei bevorzugt durch Bearbeitung bzw. Beaufschlagung von außen derart gestaucht, dass er den Verbund gegen Verschiebung in axialer Richtung sichert oder arretiert. Dies wird dadurch erreicht, dass der gestauchte Bolzenkopf radial ein wenig über den Rand des Bolzenaufnahmelochs übersteht. Weiterhin ist infolge der Stauchung der Überstand des Bolzenaufnahmekopfes in axialer Richtung über die Außenfläche des Kettenzugankers bevorzugt äußerst gering und praktisch unmerklich. Durch eine versenkte Anordnung der Bolzenköpfe in den Außenflächen des jeweiligen Kettenzugankers, verwirklicht durch eine Reduktion der Wandstärke des Kettenzugankers in den betreffenden Bereichen, kann der Überstand sogar komplett entfallen. Auch auf diese Weise ist somit eine kompakte, schmale Bauweise der Schubkette, in Wesentlichen ohne außen überstehende Teile, ermöglicht. Durch die formschlüssige Axialsperre für die Bolzen wird ein Auseinanderfallen des Verbundes bei starker Belastung gegenüber einer rein kraftschlüssigen Fixierung (durch reine Presspassung) noch zuverlässiger verhindert.

Zur Sicherstellung der gewünschten Verschwenkbarkeit der Kettenglieder gegeneinander in Biegerichtung der Schubkette sitzen die Bolzen vorteilhafterweise mit einer Spielpassung drehbeweglich in den Bolzenaufnahmelöchern der Zahnsegmentscheiben des Zwischenteils.

Hinsichtlich des Sitzes der Bolzen im Innenteil besteht Wahlfreiheit, indem die Bolzen entweder mit einer Spielpassung drehbeweglich oder mit einer Presspassung unbeweglich in den Bolzenaufnahmelöchern der Zahnsegmentscheiben des Innenteils sitzen.

Zur Vereinfachung der Fertigung besitzen vorteilhafterweise alle Zahnsegmentscheiben der Schubkette dieselbe Form. Dies schließt sowohl die Zahnsegmentscheiben des Innenteils als auch des Zwischenteils ein. Ein Vorteil ist insbesondere, dass die Verwendung mehrfach gleicher Zahnsegmentteile wesentlich kostengünstiger in der Herstellung ist.

In bevorzugter Ausgestaltung ist die Form und Anordnung der Zahnsegmentscheiben derart gewählt, dass zwei nebeneinander in einer Ebene liegende Zahnsegmentscheiben im gestreckten Zustand der Schubkette einen Endanschlag und somit einen Überstreckschutz für die Schubkette ausbilden.

Um die Tragfähigkeit der Schubkette in Zugrichtung zu erhöhen, kann es vorteilhaft sein, zusätzliche Zahnsegmentscheiben derart zu verwenden, dass nicht nur die Mindestanzahl der Zahnsegmentscheiben sondern zusätzliche Zahnsegmentscheiben so verwendet werden, dass die sich abstützenden Nocken, die im gestreckten Zustand als Endanschlag zur Verhinderung einer Überstreckung dienen, montiert werden.

Ebenso kann es von Vorteil sein, durch die Verwendung von zusätzlichen Zahnsegmentscheiben, die Stabilität gegen Ausknicken in jeglicher Richtung quer zum axialen Bewegungsablauf der Schubkette zu verbessern.

Zweckmäßigerweise weist die jeweilige Zahnsegmentscheibe einen sich in Längsrichtung der Schubkette erstreckenden geradlinigen Randabschnitt und ihm gegenüberliegend einen bogenförmigen Randabschnitt, aus dem Zähne nach außen divergierend hervorstehen, auf.

Dabei ist es zur Verwirklichung des genannten Endanschlags bevorzugt, dass die jeweilige Zahnsegmentscheibe an einer ihrer beiden Stirnseiten einen seitlich abstehenden Vorsprung und an der anderen Stirnseite eine komplementär geformte Vertiefung aufweist.

Des Weiteren ist es bevorzugt, dass die jeweilige Zahnsegmentscheibe durchgängig flach ist und kein aus der Scheibenebene herausragendes oder abstehendes Element aufweist. Das macht ihre Fertigung, etwa als Stanzteil oder Gussteil oder als 3D-Druckteil, besonders einfach.

Mit analoger Begründung besitzen vorteilhafterweise alle Kettenzuganker der Schubkette dieselbe Form.

Die Form und Anordnung der Kettenzuganker sind bevorzugt derart gewählt, dass mindestens zwei nebeneinander in einer Ebene liegende Kettenzuganker im gestreckten Zustand der Schubkette einen Endanschlag und somit einen Überstreckschutz für die Schubkette ausbilden. Dieser Überstreckschutz besteht vorteilhafterweise zusätzlich zu dem durch die Zahnsegmentscheiben des Innenteils und durch die Zahnsegmentscheiben des Zwischenteils verwirklichten Überstreckschutz, wodurch eine besonders hohe Stabilität bei der Übertragung von Schubkräften erreicht wird.

Ähnlich wie bei den Zahnsegmentscheiben ist es bevorzugt, wenn der jeweilige Kettenzuganker scheibenförmig bzw. flach ausgebildet ist und kein aus der Scheibenebene herausragendes oder abstehendes Element aufweist.

Zweckmäßigerweise sind die Zahnsegmentscheiben des Innenteils in Längsrichtung der Schubkette gesehen an gleicher Position wie die Kettenzuganker angeordnet. Die Zahnsegmentscheiben des Zwischenteils hingegen sind zweckmäßigerweise in Längsrichtung der Schubkette gesehen um eine halbe Länge einer Zahnsegmentscheibe gegenüber den Zahnsegmentscheiben des Innenteilteils verschoben bzw. versetzt angeordnet.

Vorstehende Ausführungsformen der Kettenglieder sind zum Antrieb der aus ihnen gebildeten Schubkette mit einem antriebsseitigen Stirnrad geeignet, wobei das antriebsseitige Stirnrad bezogen auf einen angetriebenen und umgelenkten Schubkettenabschnitt außen angeordnet ist, so dass es in die Zähne der Zahnsegmentscheiben eingreifen kann. Dabei liegen die geraden Randabschnitte dieser Zahnsegmentscheiben an einer gemeinsamen Umlenkrolle an, die gegenüber dem antriebsseitigen Zahnrad und der Schubkette innen angeordnet ist. Mit dieser Anordnung des Stirnrads ist es möglich, den Hebelarm, auf den die Kettenkraft des Schubkettenantriebs wirkt, sehr klein zu halten und es wird eine kraftverlustarme Umlenkung realisiert.

Zum Antrieb der Schubkette steht zweckmäßigerweise ein Elektromotor über ein Getriebe mit dem antriebsseitigen Stirnrad in kraftflussmäßiger Verbindung. Der Motor kann zusammen mit einer zugehörigen Steuer- oder Regelungselektronik in einem gekapselten bzw. abgedichteten Gehäuse an einem Ende des Antriebsstrangs angeordnet sein, während eine derartige Kapselung für das Getriebe am anderen Ende des Antriebsstrangs nicht unbedingt erforderlich ist.

Die Erfindung wird im Folgenden anhand eines Ausführungsbeispiels einer Zahnsegmentscheibe und eines Kettenzugankers, die zum Zusammensetzen eines Kettenglieds verwendbar sind, eines Ausführungsbeispiels eines aus derartigen Kettengliedern zusammengesetzten Schubkettenabschnitts, sowie eines Ausführungsbeispiels eines zugehörigen Antriebsstrangs erläutert. Es zeigen:
- Figur 1: eine seitliche Draufsicht auf eine Zahnsegmentscheibe,
- Figur 2: eine seitliche Draufsicht auf einen Kettenzuganker,
- Figur 3: eine teilweise geschnittene bzw. transparent gehaltene seitliche Draufsicht auf einen aus Zahnsegmentscheiben und Kettenzugankern zusammengesetzten Schubkettenabschnitt,
- Figur 4: eine perspektivische Ansicht des Schubkettenabschnitts gemäß Figur 3,
- Figur 5: eine Draufsicht von oben auf den Schubkettenabschnitt gemäß den Figuren 3 und 4,
- Figur 6: einen Schnitt durch den Schubkettenabschnitt gemäß Figur 5 in der Schnittebene A-A,
- Figur 7: eine perspektivische Ansicht eines Bolzens zum Verbinden von Zahnsegmentscheiben und Kettenzugankern in einem Schubkettenabschnitt gemäß den Figuren 3 bis 6,
- Figur 8: eine seitliche Draufschicht auf einen innerhalb eines Gehäuses angetriebenen und umgelenkten Schubkettenabschnitt in einem Antriebs- und Umlenkbereich mit einem antriebsseitigen Stirnrad, das in den Schubkettenabschnitt eingreift,
- Figur 9: eine schematische Darstellung eines Schubkettenabschnitts mit einem zugehörigen Antriebsstrang,
- Figur. 10: eine perspektivische Ansicht eines gegenüber Figur 7 leicht abgewandelten Bolzens, und
- Figur. 11: eine zu Figur 5 analoge Draufsicht von oben auf einen Schubkettenabschnitt mit einem Bolzen gemäß Figur 10.

Gleiche oder gleichwirkende Teile sind in den Figuren mit denselben Bezugszeichen versehen.

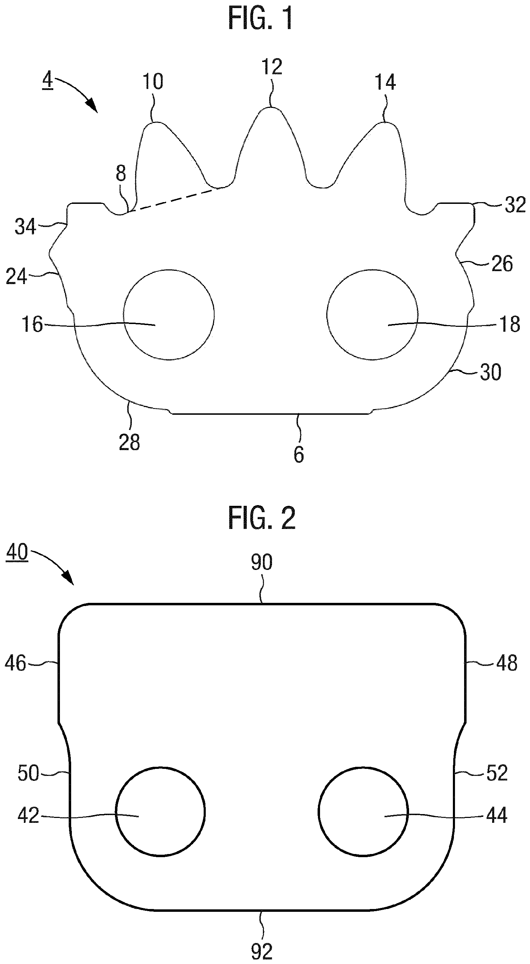

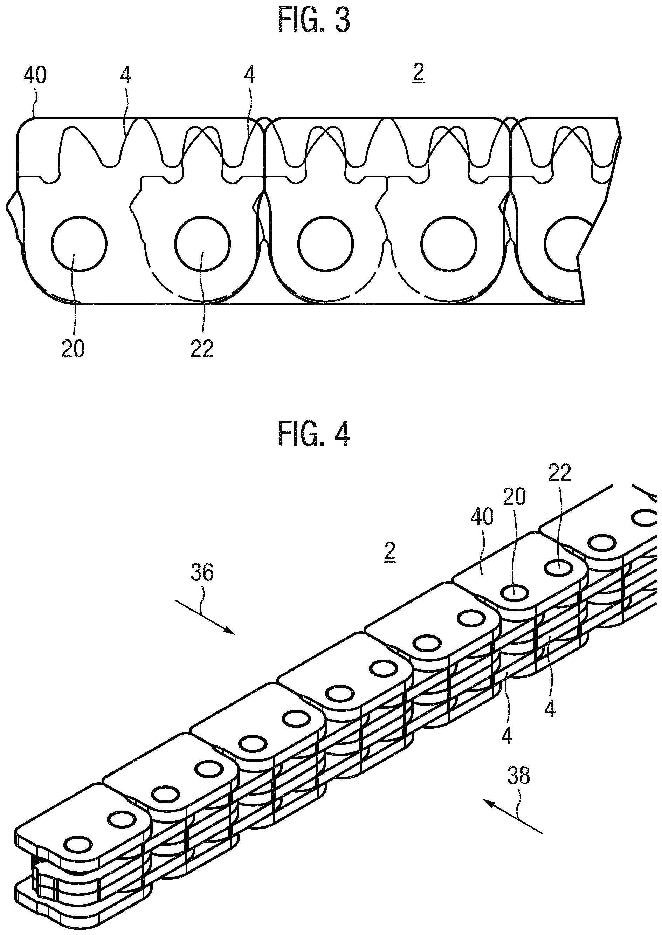

Die erfindungsgemäße Schubkette 2 weist als ein wesentliches Element Kettenglieder in Gestalt von Zahnsegmentscheiben auf. Die einem Zahnsegment eines Zahnrads nachgebildete Form der Zahnsegmentscheibe 4 geht aus der Figur 1 hervor. Die Form ist durch einen in Längsrichtung der Zahnsegmentscheibe 4 verlaufenden geraden Randabschnitt 6, der über der Dicke der Zahnsegmentscheibe 4 plan ist, sowie durch einen diesem in Figur 1 oben gegenüberliegenden unterbrochenen bogenförmigen Randabschnitt 8 gekennzeichnet, aus dem drei Zähne 10, 12 und 14 divergierend nach oben hervorstehen. Der bogenförmige Randabschnitt 8 bildet gewissermaßen eine gedachte Basislinie, aus der die Zähne 10, 12 und 14 nach oben hervorstehen. Die von dem bogenförmigen Randabschnitt 8 der Zahnsegmentscheibe 4 nach oben divergierenden Zähne 10, 12 und 14 konvergieren in der entgegengesetzten Richtung zu einem Punkt, welcher dem Mittelpunkt eines Zahnrads entspricht, dem die Zahnradsegmentscheibe 4 teilweise nachgebildet ist. Die Zahnsegmentscheibe 4 weist ferner zwei in Längsrichtung beabstandete Bolzenaufnahmelöcher 16, 18 auf, die bei Montage eines Kettenglieds jeweils einen der Bolzen 20 bis 22 aufnehmen, deren Stirnseiten in Figur 3 sichtbar sind. Die Außenform der Zahnsegmentscheibe 4 ist durch stirnseitig außen einander gegenüberliegende Abstützflächen 24 und 26, die im Wesentlichen quer zu der Längsrichtung der Zahnsegmentscheibe 4 senkrecht verlaufen und sich an diese anschließende bogenförmige Abschnitte 28 und 30, die an dem geraden Randabschnitt 6 enden, geschlossen.

An der in Figur 1 rechten Abstützfläche 26 steht ein Vorsprung 32 seitlich - innerhalb der Scheibenebene - hervor, der kongruent bzw. komplementär zu einer entsprechenden Vertiefung 34 in der in Figur 1 linken Abstützfläche 24 geformt ist. Wenn mehrere formgleiche Zahnsegmentscheiben 4 wie weiter unten im Zusammenhang mit Figur 3 beschrieben in einer Schubkette 2 nebeneinander angeordnet sind, greift im gestreckten Zustand der seitliche Vorsprung 32 einer Zahnsegmentscheibe 4 passgenau in die zugeordnete Vertiefung 34 der unmittelbar benachbarten Zahnsegmentscheibe 4 ein. Dadurch ist im gestreckten Zustand ein Endanschlag verwirklicht, der eine Überstreckung oder Durchbiegung der Schubkette 2 über den gestreckten Zustand hinaus in der Sperrrichtung 36 verhindert. Eine Biegung bzw. Krümmung der Schubkette 2 senkrecht zur Längsrichtung ist vielmehr nur in der anderen Richtung, nämlich der Biegerichtung 38 möglich.

Figur 2 zeigt in seitlicher Draufsicht als weiteres wesentliches Element der erfindungsgemäßen Schubkette 2 einen platten- oder scheibenförmigen Kettenzuganker 40, dessen Umriss im Wesentlichen eine rechteckige Kontur mit in Längsrichtung ausgerichteten geraden Randabschnitten 90, 92 und mit abgerundeten Ecken aufweist. Der Kettenzuganker 40 weist in einem in Figur 2 unteren Bereich ferner zwei in Längsrichtung beabstandete Bolzenaufnahmelöcher 42, 44 auf, die bei der Montage eines Kettenglieds jeweils einen der Bolzen 20, 22 aufnehmen, deren Stirnseiten in Figur 3 sichtbar sind. Der Achsabstand der Bolzenaufnahmelöcher 42, 44 stimmt mit dem Achsabstand der Bolzenaufnahmelöcher 16, 18 in den Zahnsegmentscheiben 4 überein. An den Stirnseiten des Kettenzugankers 40 befinden sich in einem in Figur 2 oberen Bereich plane Abstützflächen 46, 48, während darunter liegend jeweils ein abgerundeter Rücksprung 50, 52 vorgesehen ist. Wenn mehrere formgleiche Kettenzuganker 40 wie weiter unten beschrieben in einer Schubkette 2 nebeneinander angeordnet sind, liegt im getreckten Zustand der Schubkette 2 die Abstützfläche 48 des einen Kettenzugankers 40 an der Abstützfläche 46 des unmittelbar benachbarten Kettenzugankers 40 an. Dadurch ist im gestreckten Zustand der Schubkette gemäß Figur 3 ein Endanschlag verwirklicht, der eine Überstreckung oder Durchbiegung der Schubkette 2 über den gestreckten Zustand in Sperrrichtung 36 hinaus verhindert. Eine Biegung der Schubkette 2 senkrecht zur Längsrichtung ist vielmehr nur in der Biegerichtung 38 möglich. Diese Bewegungsfreiheit wird durch die seitlichen Rücksprünge 50, 52 in der Außenkontur des Kettenzugankers 40 gewährleistet. Der durch die Kettenzuganker 40 bewirkte Überstreckschutz besteht in der fertig montierten Schubkette 2 gewissermaßen parallel oder zusätzlich zu demjenigen, der durch die Zahnsegmentscheiben 4 verwirklicht ist (diversitäre Redundanz), wodurch zuverlässig besonders hohe Schubkräfte bewältigt werden können.

Aus den Figuren 3, 4, 5 und 6 geht der Aufbau der zusammengesetzten Schubkette hervor 2. Die Schubkette umfasst ein Innenteil 54 und ein das Innenteil 54 sandwichartig umschließendes, aus zwei voneinander beabstandeten einzelnen Reihen bestehendes Zwischenteil 56 aus jeweils in Längsrichtung nebeneinander liegenden formgleichen Zahnsegmentscheiben 4. Zur Vergrößerung der Dicke des Innenteils 54 können jeweils zwei oder mehr Zahnsegmentscheiben 4 deckungsgleich aufeinanderliegend angeordnet sein. Im vorliegenden Beispiel umfasst das Innenteil 54 zwei Lagen bzw. Reihen von Zahnsegmentscheiben 4. Zwar wäre es auch denkbar, im Innenteil 54 dickere Zahnsegmentscheiben 4 als im Zwischenteil 56 vorzusehen, aber wenn die gesamte Schubkette 2 nur aus Zahnsegmentscheiben 4 ein- und desselben Typs besteht, lässt sich der Fertigungsaufwand geringer halten. Die beiden Reihen der Zahnsegmentscheiben 4 des Zwischenteils 56 sind jeweils gegenüber der Reihe der Zahnsegmentscheiben 4 des Innenteils 54 um eine halbe Länge einer Zahnsegmentscheibe 4 verschoben. Das bedeutet, dass beispielsweise ein durch das reche Bolzenaufnahmeloch 18 der Zahnsegmentscheibe 4 des Innenteils 54 gesteckter Bolzen 22 durch das linke Bolzenaufnahmeloch 16 der darüber oder darunter liegenden Zahnsegmentscheibe 4 des Zwischenteils 56 hindurchgreift usw. Die Zähne 10, 12, 14 aller Zahnsegmentscheiben 4 zeigen in die gleiche Richtung, und die Abstände der Bolzenaufnahmelöcher 16, 18 in Längsrichtung sind derart bemessen, dass sowohl durch die Zahnsegmentscheiben 4 des Innenteils 54 als auch durch die Zahnsegmentscheiben 4 des Zwischenteils 56 der bereits erwähnte Überstreckschutz verwirklicht ist.

Anstelle der beschriebenen Sandwichanordnung mit einem doppellagigen Innenteil 54 kann ein lediglich einlagiges Innenteil 54 vorgesehen sein, wenn die Schubkette 2 besonders schmal gehalten werden soll. Zur Verbesserung der Stabilität hingegen können beispielsweise auch die äußeren, das Zwischenteil 56 bildenden Reihen von Zahnsegmentscheiben 4 doppellagig ausgebildet sein. Darüber hinaus ist beispielsweise eine Doppel- oder Mehrfachsandwich-Konfiguration mit noch mehr gegeneinander versetzten Reihen denkbar, die dann allerdings recht breit ausfällt. Für eine schmale Bauweise liegen die verschiedenen Reihen in Querrichtung gesehen mit möglichst geringem Spalt aneinander an, ohne jedoch die Beweglichkeit der Schubkette 2 an den durch die Bolzen 20, 22 verwirklichten Gelenken wesentlich zu beeinträchtigen.

Der in Querrichtung gesehen äußere Abschluss der Schubkette 2 wird durch zwei das Zwischenteil 56 sandwichartig umschließende Reihen von in Längsrichtung hintereinander angeordneten formgleichen Kettenzugankern 40 gebildet, wie aus den Figuren 3, 4, 5 und 6 ersichtlich ist. Gemäß Figur 3 liegt der jeweilige Kettenzuganker 40 in Bezug auf seinen äußerem Umriss im Wesentlichen deckungsgleich zu einer ihm zugeordneten Zahnsegmentscheibe 4 des Innenteils 54, wobei beide durch die dazwischen liegenden Zahnsegmentscheiben 4 des Zwischenteils 56 in Querrichtung gesehen voneinander beabstandet sind. Insbesondere liegen die Bolzenaufnahmelöcher 42, 44 des Kettenzugankers 40 deckungsgleich zu den Bolzenaufnahmelöchern 16, 18 der ihm zugeordneten Zahnsegmentscheibe 4 des Innenteils 54 und zu den Bolzenaufnahmelöchern 16, 18 der Zahnsegmentscheiben 4 der Zwischenteils 56, wobei letztere wie bereits erwähnt in Längsrichtung aufgrund der versetzen Anordnung um eine halbe Kettengliedlänge verschoben sind. Die Anordnung wird durch Bolzen 16, 18 schwenkbar zusammengehalten, die durch die fluchtenden Bolzenaufnahmelöcher 16, 18, 42, 44 der verschiedenen Kettenbestandteile gesteckt sind. Im gestreckten Zustand der Schubkette 2 ragen die Ränder und insbesondere die Zähne 10, 12 14 der jeweiligen Zahnsegmentscheibe 4 nicht über den zugeordneten Kettenzuganker 40 hinaus. Der Kettenzuganker kann somit auch als eine die Außenkontur der Schubkette 2 definierende bzw. begrenzende Außenlasche angesehen und bezeichnet werden. Die Gesamtheit der Kettenzuganker 40 bildet eine Außenteil der Schubkette 2.

Die Kettenzuganker 40 sind wie bereits erwähnt derart dimensioniert und angeordnet, dass der durch die Abstützflächen 46, 48 bewirkte Übertreckschutz den durch die Zahnsegmentscheiben 4 bewirkten Überstreckschutz unterstützt. Durch die sandwichartige beidseitige Anbringung der Kettenzuganker 40 wird eine weitere Symmetrierung der Kraftübertragung von Schub- und Zugkräften erreicht. Sie dient auch zur Verhinderung des Abknickens der Schubkette 2 quer zur Transportrichtung. Für eine schmale Bauweise der Schubkette 2 liegt der jeweilige Kettenzuganker 40 außen flach an den beiden ihm zugeordneten Zahnsegmentscheiben 4 des Zwischenteils 56 an und überbrückt gewisserma-ßen in beweglicher Weise den Zwischenraum zwischen ihnen.

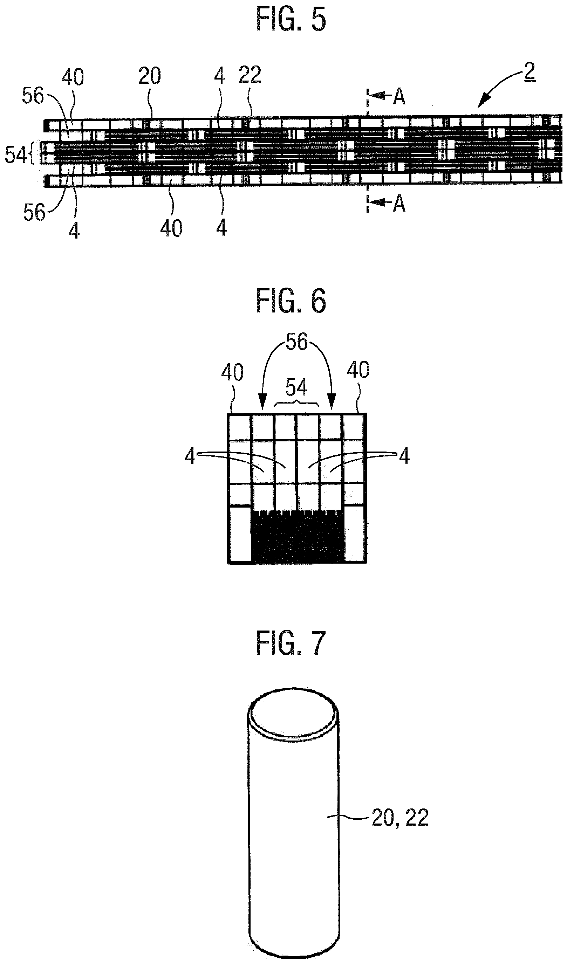

Wie bereits erwähnt, wird die Schubkette durch Bolzen 20, 22 zusammengehalten, die durch die fluchtend um jeweils eine gemeinsame Achse angeordneten Bolzenaufnahmelöcher 16, 18 der Zahnsegmentscheiben 4 des Innenteils 54 und des Zwischenteils 56 sowie durch die Bolzenaufnahmelöcher 42, 44 der Kettenzuganker 40 gesteckt sind. Bei den Bolzen 20, 22 handelt es sich gemäß der perspektivischen Darstellung in Figur 7 zweckmäßigerweise um Rundbolzen, die vorzugsweise als Vollzylinder ausgebildet sind. Der jeweilige Bolzen 20, 22 sitzt vorzugsweise mit Spielpassung in den Bolzenaufnahmelöchern 16, 18 der Zahnsegmentscheiben 4 des Innenteils 54 und des Zwischenteils 56. Alternativ kann auch eine Presspassung in den Bolzenaufnahmelöchern 16, 18 der Zahnsegmentscheiben 4 des Innenteils 54 vorgesehen sein. In den Bolzenaufnahmelöchern 42, 44 der außenliegenden Kettenzuganker 40 ist eine Presspassung bevorzugt. Das bedeutet, dass der jeweilige Bolzen 20, 22 unbeweglich gegenüber dem Kettenzuganker 40 und ggf. auch unbeweglich gegenüber der zugeordneten Zahnsegmentscheibe 4 des Innenteils 54 ist, dass aber das jeweilige Kettenglied des Zwischenteils 56 drehbeweglich gegenüber dem starren Verbund aus Kettenzuganker 40 und zugeordneter Zahnsegmentscheibe 4 des Innenteils 54 ist. Da dieser starre Verbund bereits durch die beiden ihm zugeordneten Bolzen 20, 22 aus geometrischen Gründen erzwungen wird, ist eine Presspassung in den Bolzenaufnahmelöchern 16, 18 der Zahnsegmentscheiben 4 des Innenteils 54 möglich, jedoch nicht unbedingt erforderlich. Bevorzugt ist die Presspassung bzw. Pressfassung jedoch in den Bolzenaufnahmelöchern 42, 44 der Kettenzuganker 40, um ohne weitere Hilfs- oder Befestigungsmittel wie etwa Muttern den Zusammenhalt der Schubkette 2 zu gewährleiten.

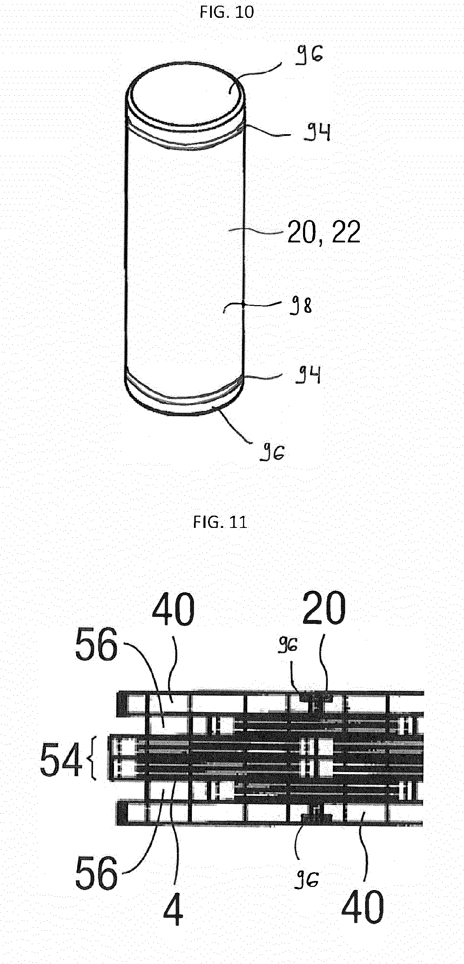

Bei der in Figur 10 dargestellten Variante weist der jeweilige Bolzen 20, 22 beidseitig (in der jeweiligen Endregion) umlaufende Vertiefungen oder Ringnuten 94 auf, die jeweils einen flachen Bolzenkopf 96 vom restlichen Bolzenschaft 98 im Sinne einer Abschnittunterteilung separieren. Bei der Montage der Schubkette 2 werden die Bolzenköpfe 96 vorzugsweise von außen gestaucht oder "abgeplattet" und in zugehörige Rücksprünge oder Wandvertiefungen im Bereich der Umrandung der Bolzenaufnahmelöcher 42, 44 der Kettenzuganker 40 hineingepresst, so dass kein merklicher Überstand nach außen, sprich in Axialrichtung vorliegt. Durch den in Figur 11 übertrieben dargestellten radialen Überstand der Bolzenköpfe 96 gegenüber der Umrandung der Bolzenaufnahmelöcher 42, 44 wird eine sichere axiale Fixierung oder Arretierung der Bolzen 20, 22 im Verbund der Komponenten gewährleistet.

Die jeweilige Spielpassung oder alternativ Presspassung kann durch geeignete Wahl der Durchmesser der Bolzenaufnahmelöcher 16, 18, 42, 44 in Relation zum vorteilhafterweise konstanten Bolzendurchmesser bewerkstelligt werden. Bei der Montage der Schubkette 2 werden zweckmäßigerweise zunächst die Kettenglieder des Innenteils 54 und des Zwischenteils 56 durch Hindurchstecken der Bolzen 20, 22 miteinander verbunden, und anschließend werden die äußeren Kettenzuganker 40 durch Einpressen der überstehenden Bolzenabschnitte in die Bolzenaufnahmelöcher 42, 44 aufgesetzt.

Außerdem kann die Länge der Bolzen 20, 22 vorteilhafterweise so gewählt werden, dass sie in der zusammengesetzten Schubkette 2 nicht über die Außenflächen der Kettenzuganker 40 überstehen, sondern dass wie in den Figuren 5 und 6 ersichtlich ein bündiger Abschluss oder sogar eine leicht versenkte Anordnung besteht. Andererseits ist die Länge der Bolzen 20, 22 so groß gewählt, dass die beschriebene Presspassung in den Bolzenaufnahmelöchern 42, 44 der Kettenzuganker 40 realisierbar ist. Durch die Vermeidung überstehender Teile kann die Schubkette 2 besonders schmal gebaut werden. Zudem wird beim Betrieb ein unerwünschtes Hängenbleiben an umliegenden Anlagenteilen vermieden.

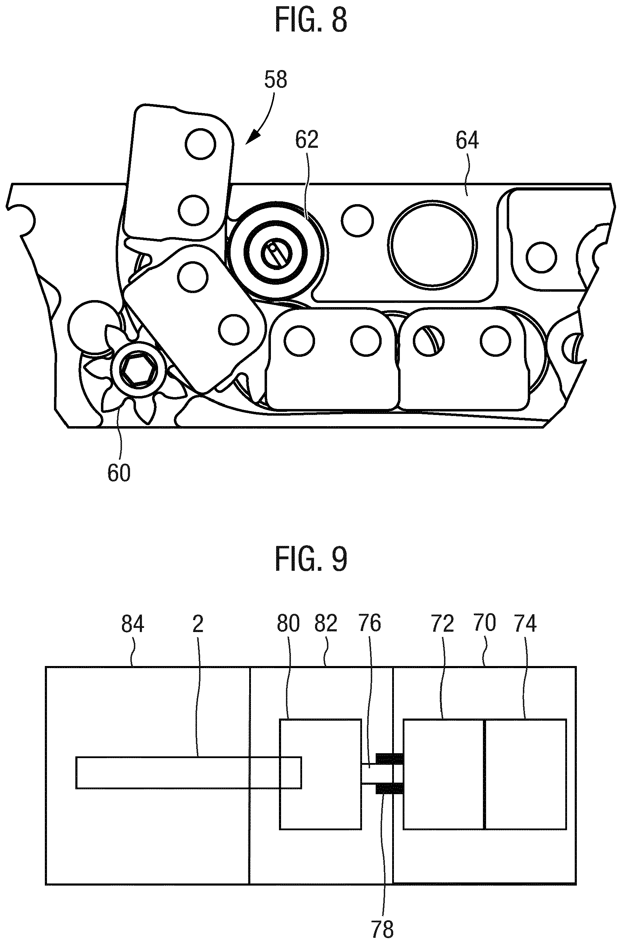

Zur weiteren Veranschaulichung, wie Kettenglieder einer Schubkette 2 aus untereinander formgleichen Zahnsegmentscheiben 4 mit Formmerkmalen gemäß Figur 1 und aus untereinander formgleichen Kettenzugankern 40 mit Formmerkmalen gemäß Figur 2 zusammengesetzt sind, wird auf Figur 8 Bezug genommen. Darin sind mehrere Kettenglieder eines angetriebenen und umgelenkten Schubkettenabschnitts 58 in Antriebs- und Umlenkposition gezeigt, an den sich rechts unten und links oben jeweils ein gerader Schubkettenabschnitt anschließen kann.

Aus Figur 8 kann weiterhin entnommen werden, wie die Schubkette 2 mit dem Schubkettenabschnitt 58 in Antriebs- und Umlenkposition mittels eines antriebsseitigen Stirnrads 60 angetrieben wird, indem das Stirnrad 60 zwischen die Zähne 10, 12, 14 aufeinanderfolgender Zahnsegmentscheiben 4 des Innenteils 54 eingreifen kann. Dadurch wird das Kettenglied seitlich gut geführt und die Schubkraft wird gleichmäßig übertragen. Man sieht in der Figur 8 auch, dass das Stirnrad 60, welches insbesondere Bestandteil eines elektromotorisch oder anderweitig angetriebenen Stirnradgetriebes sein kann, hinsichtlich der Durchbiegung bzw. Umlenkung der Schubkette 2 an deren Außenseite angreift, während an der gegenüberliegenden Innenseite die Kettenglieder an deren stückweise geraden Randabschnitten 6, 92 auf einer geeignet dimensionierten Umlenkrolle 62 abrollen. Eine zusätzliche Führung der Schubkette 2 kann innerhalb des umliegenden Gehäuses 64 durch geeignet geformte Gehäusewandabschnitte oder innere Führungselemente sowie ggf. durch weitere Rollen erfolgen.

Figur 9 zeigt in stark vereinfachter, rein schematischer Darstellung die Schubkette 2 mit einem zugehörigen Antriebsstrang. In einem abgegrenzten und gegenüber Flüssigkeit, insbesondere Wasser und/oder Öl, abgedichteten Motorgehäuse 70 ist ein Elektromotor 72 als Antriebsmotor ggf. zusammen mit einer zugehörigen Steuer- oder Regelungselektronik 74 untergebracht. Die Antriebswelle 76 des Elektromotors 72 ist über eine in der Gehäusewand angeordnete Wellendichtung 78 aus dem Motorgehäuse 70 herausgeführt und treibt über ein Getriebe 80 eine Schubkette 2 an. Das Getriebe 80 kann am Ende des Antriebsstrangs ein in die Schubkette 2 eingreifendes Stirnrad 60 als Antriebsrad für die Schubkette 2 aufweisen und dabei einen Umlenkabschnitt wie in Figur 8 ausbilden. Das Getriebe 80 ist vorteilhafterweise in einem an das Motorgehäuse 70 angeflanschten Getriebegehäuse 82 angeordnet, welches nicht oder jedenfalls nicht in dem Maße wie das Motorgehäuse 70 abgedichtet sein muss. Jenseits des Getriebegehäuses 82 erstreckt sich im Rahmen der jeweiligen Anwendung ein offener oder mittels eines weiteren Gehäuses verschlossener Kettenraum 84 für die Schubkette 2.

Wie eingangs erwähnt, werden erfindungsgemäße Schubketten bevorzugt zur Betätigung von Fenstern, Türen, Klappen und Lichtkuppeln, insbesondere in RWA-Anlagen in Gebäuden, eingesetzt. Grundsätzlich sind alle möglichen linearen Schub- und Zugbewegungen an Öffnungs- oder Schließelementen, Hebe- oder Senkvorrichtungen zur Veränderung der Position der zu betätigenden Einrichtung möglich.

### Bezugszeichenliste

- 2: Schubkette
- 4: Zahnsegmentscheibe
- 6: gerader Randabschnitt
- 8: bogenförmiger Randabschnitt
- 10: Zahn
- 12: Zahn
- 14: Zahn
- 16: Bolzenaufnahmeloch
- 18: Bolzenaufnahmeloch
- 20: Bolzen
- 22: Bolzen
- 24: Abstützfläche
- 26: Abstützfläche
- 28: bogenförmiger Abschnitt
- 30: bogenförmiger Abschnitt
- 32: Vorsprung
- 34: Vertiefung
- 36: Sperrrichtung
- 38: Biegerichtung
- 40: Kettenzuganker
- 42: Bolzenaufnahmeloch
- 44: Bolzenaufnahmeloch
- 46: Abstützfläche
- 48: Abstützfläche
- 50: Rücksprung
- 52: Rücksprung
- 54: Innenteil
- 56: Zwischenteil
- 58: Schubkettenabschnitt
- 60: Stirnrad
- 62: Umlenkrolle
- 64: Gehäuse
- 70: Motorgehäuse
- 72: Elektromotor
- 74: Steuer- und Regelungselektronik
- 76: Antriebswelle
- 78: Wellendichtung
- 80: Getriebe
- 82: Getriebegehäuse
- 84: Kettenraum
- 90: gerader Randabschnitt
- 92: gerader Randabschnitt
- 94: Ringnut
- 96: Bolzenkopf
- 98: Bolzenschaft

## Patentansprüche

1. Mit einem Kettenantrieb betätigbare schiebesteife Schubkette (2), die ein aus Zahnsegmentscheiben (4) zusammengesetztes Innenteil (54), ein aus Zahnsegmentscheiben (4) zusammengesetztes Zwischenteil (56) und ein aus Kettenzugankern (40) zusammengesetztes Außenteil aufweist, wobei das Zwischenteil (56) das Innenteil (54) sandwichartig umgibt und das Außenteil das Zwischenteil (56) sandwichartig umgibt, und wobei die Zahnsegmentscheiben (4) und die Kettenzuganker (40) fluchtende Bolzenaufnahmelöcher (16, 18, 42, 44) aufweisen und mit Hilfe von durch die Bolzenaufnahmelöcher (16, 18, 42, 44) hindurch gesteckten Bolzen (20, 22) miteinander verbunden sind, **dadurch gekennzeichnet, dass** der jeweilige Bolzen (20, 22) an beiden Enden jeweils eine umlaufende Ringnut (94) und einen flachen Bolzenkopf (96) aufweist, wobei die jeweilige Ringnut (94) in einem zugeordneten Bolzenaufnahmeloch (42, 44) eines Kettenzugankers (40) sitzt, und wobei der jeweilige Bolzenkopf (96) derart gestaucht oder abgeplattet ist, dass der Bolzen (20, 22) durch zumindest teilweisen Formschluss gegen axiale Verschiebung gesichert ist, und dass durch eine versenkte Anordnung der Bolzenköpfe (96) in den Außenflächen des jeweiligen Kettenzugankers (40), verwirklicht durch eine Reduktion der Wandstärke des Kettenzugankers (40) in den betreffenden Bereichen, die Bolzen (20, 22) nicht über die Außenflächen der Kettenzuganker (40) hinausstehen.

2. Schubkette (2) nach Anspruch 1, wobei die Bolzen (20, 22) mit einer Presspassung unbeweglich in den Bolzenaufnahmelöchern (42, 44) der Kettenzuganker (40) sitzen.

3. Schubkette (2) nach einem der vorhergehenden Ansprüche, wobei die Bolzen (20, 22) mit einer Spielpassung drehbeweglich in den Bolzenaufnahmelöchern (16, 18) der Zahnsegmentscheiben (4) des Zwischenteils (56) sitzen.

4. Schubkette nach einem der vorhergehenden Ansprüche, wobei die Bolzen (20, 22) mit einer Spielpassung drehbeweglich oder mit einer Presspassung unbeweglich in den Bolzenaufnahmelöchern (16, 18) der Zahnsegmentscheiben (4) des Innenteils (54) sitzen.

5. Schubkette (2) nach einem der vorhergehenden Ansprüche, wobei alle Zahnsegmentscheiben (4) dieselbe Form besitzen.

6. Schubkette (2) nach Anspruch 5, wobei die Form und Anordnung der Zahnsegmentscheiben (4) derart gewählt ist, dass zwei nebeneinander in einer Ebene liegende Zahnsegmentscheiben (4) im gestreckten Zustand der Schubkette (2) einen Endanschlag und somit einen Überstreckschutz für die Schubkette (2) ausbilden.

7. Schubkette (2) nach Anspruch 5 oder 6, wobei die jeweilige Zahnsegmentscheibe (4) einen sich in Längsrichtung der Schubkette (2) erstreckenden geradlinigen Randabschnitt (6) und ihm gegenüberliegend einen bogenförmigen Randabschnitt (8), aus dem Zähne (10, 12, 14) nach außen divergierend hervorstehen, aufweist.

8. Schubkette (2) nach einem der Ansprüche 5 bis 7, wobei die jeweilige Zahnsegmentscheibe (4) an einer ihrer beiden Stirnseiten einen seitlich abstehenden Vorsprung (32) und an der anderen Stirnseite eine komplementär geformte Vertiefung (34) aufweist.

9. Schubkette (2) nach einem der Ansprüche 5 bis 8, wobei die jeweilige Zahnsegmentscheibe (4) kein aus der Scheibenebene herausragendes oder abstehendes Element aufweist.

10. Schubkette (2) nach einem der vorhergehenden Ansprüche, wobei alle Kettenzuganker (40) dieselbe Form besitzen.

11. Schubkette (2) nach Anspruch 10, wobei die Form und Anordnung der Kettenzuganker (40) derart gewählt ist, dass zwei nebeneinander in einer Ebene liegende Kettenzuganker (40) im gestreckten Zustand der Schubkette einen Endanschlag und somit einen Überstreckschutz für die Schubkette (2) ausbilden.

12. Schubkette (2) nach Anspruch 10 oder 11, wobei der jeweilige Kettenzuganker (40) scheibenförmig ausgebildet ist und kein aus der Scheibenebene herausragendes oder abstehendes Element aufweist.

13. Schubkette (2) nach einem der vorhergehenden Ansprüche, wobei die Zahnsegmentscheiben (4) des Innenteils (54) in Längsrichtung der Schubkette (2) gesehen an gleicher Position wie die Kettenzuganker (40) angeordnet sind.

14. Schubkette (2) nach einem der vorhergehenden Ansprüche, wobei die Zahnsegmentscheiben (4) des Zwischenteils (56) in Längsrichtung der Schubkette (2) gesehen um eine halbe Länge einer Zahnsegmentscheibe (4) gegenüber den Zahnsegmentscheiben (4) des Innenteilteils (54) verschoben angeordnet sind.

15. Kettenantrieb mit einer Schubkette (2) nach einem der vorhergehenden Ansprüche, welcher einen Elektromotor (72) aufweist, der ein in Zähne (10, 12, 14) der Zahnsegmentscheiben (4) des Innenteils (54) eingreifendes Stirnrad (60) antreibt, wobei das Stirnrad (60) in einem Umlenkabschnitt am Außenradius der Schubkette (2) angeordnet ist.

## Claims

1. A push-resistant thrust chain (2) activated with a chain drive, which has an inner part (54) made up of toothed segment discs (4), an intermediate part (56) made up of toothed segment discs (4) and an outer part made up of chain tension anchors (40), wherein the intermediate part (56) surrounds the inner part (54) in a sandwich-like manner and the outer part surrounds the intermediate part (56) in a sandwich-like manner, and wherein the toothed segment discs (4) and the chain tension anchors (40) have aligned pin receiving holes (16, 18, 42, 44) and are connected to one another by means of pins (20, 22) inserted through the pin receiving holes (16, 18, 42, 44), **characterized in that** the respective pin (20, 22) respectively has a circumferential annular groove (94) and a flat pin head (96) on both ends, wherein the respective annular groove (94) is seated in an associated pin receiving hole (42, 44) of a chain tension anchor (40), and wherein the respective pin head (96) is compressed or flattened in such a way that the pin (20, 22) is secured against axial displacement through at least partial form fit, and **in that** thanks to a recessed arrangement of the pin heads (96) in the outer surfaces of the respective chain tension anchor (40), achieved by a reduction in the wall thickness of the chain tension anchor (40) in the respective regions, the pins (20, 22) do not protrude beyond the outer surfaces of the chain tension anchors (40) .

2. The thrust chain (2) according to Claim 1, wherein the pins (20, 22) are seated immovably in the pin receiving holes (42, 44) of the chain tension anchors (40) with an interference fit.

3. The thrust chain (2) according to one of the preceding claims, wherein the pins (20, 22) are seated in the pin receiving holes (16, 18) of the toothed segment discs (4) of the intermediate part (56) with a clearance fit so as to be rotational.

4. The thrust chain according to one of the preceding claims, wherein the pins (20, 22) are seated in the pin receiving holes (16, 18) of the toothed segment discs (4) of the inner part (54) with a clearance fit so as to be rotational or immovably with an interference fit.

5. The thrust chain (2) according to one of the preceding claims, wherein all toothed segment discs (4) have the same shape.

6. The thrust chain (2) according to Claim 5, wherein the shape and arrangement of the toothed segment discs (4) is selected in such a way that two toothed segment discs (4) lying next to each other in a plane form an end stop and thus an overstretch protection for the thrust chain (2) when the thrust chain (2) is stretched.

7. The thrust chain (2) according to Claim 5 or 6, wherein the respective toothed segment disc (4) has a straight edge section (6) extending in the longitudinal direction of the thrust chain (2), and opposite it a curved edge section (8), from which teeth (10, 12, 14) protrude diverging outwards.

8. The thrust chain (2) according to either one of Claims 5 or 7, wherein the respective toothed segment disc (4) has a laterally projecting protrusion (32) on one of its two end faces and a matching recess (34) on the other end face.

9. The thrust chain (2) according to one of Claims 5 to 8, wherein the respective toothed segment disc (4) has no element projecting or protruding from the disc plane.

10. The thrust chain (2) according to one of the preceding claims, wherein all chain tension anchors (40) have the same shape.

11. The thrust chain (2) according to Claim 10, wherein the shape and arrangement of the chain tension anchors (40) is selected in such a way that two chain tension anchors (40) lying next to each other in a plane form an end stop and thus an overstretch protection for the thrust chain (2) when the thrust chain (2) is stretched.

12. The thrust chain (2) according to Claim 10 or 11, wherein the respective chain tension anchor (40) is disc-shaped has no element projecting or protruding from the disc plane.

13. The thrust chain (2) according to one of the preceding claims, wherein the toothed segment discs (4) of the inner part (54) are arranged at the same position as the chain tension anchors (40) when viewed in the longitudinal direction of the thrust chain (2).

14. The thrust chain (2) according to one of the preceding claims, wherein the toothed segment discs (4) of the intermediate part (56) are arranged offset by half the length of a toothed segment disc (4) relative to the toothed segment discs (4) of the inner part (54) when viewed in the longitudinal direction of the thrust chain (2) .

15. A chain drive having a thrust chain (2) according to one of the preceding claims, which has an electric motor (72), which drives a spur gear (60) engaging in teeth (10, 12, 14) of the toothed segment discs (4) of the inner part (54), wherein the spur gear (60) is arranged in a deflection section on the outer radius of the thrust chain (2).

## Revendications

1. Chaîne de poussée (2) rigide à la poussée, actionnable par une transmission par chaîne, qui comporte une partie intérieure (54) composée de disques (4) à segments dentés, une partie intermédiaire (56) composée de disques (4) à segments dentés et une partie extérieure composée de tirants de chaîne (40), la partie intermédiaire (56) entourant à la manière d'un sandwich la partie intérieure (54) et la partie extérieure entourant à la manière d'un sandwich la partie intermédiaire (56) et les disques (4) à segments dentés et les tirants de chaîne (40) comportant des trous récepteurs de boulons (16, 18, 42, 44) alignés et étant assemblés les uns avec les autres à l'aide de boulons (20, 22) enfichés à travers les trous récepteurs de boulons (16, 18, 42, 44), **caractérisé en ce que** le boulon (20, 22) respectif comporte sur ses deux extrémités une rainure annulaire (94) périphérique et une tête de boulon (96) plate, la rainure annulaire (94) respective étant logée dans un trou récepteur de boulon (42, 44) associé d'un tirant de chaîne (40) et la tête de boulon (96) respective étant écrasée ou aplatie de telle sorte que le boulon (20, 22) soit bloqué par une complémentarité de forme au moins partielle contre d'un déplacement axial et **en ce que** par un placement noyé des têtes de boulons (96) dans les surfaces extérieures des tirants de chaîne (40) respectifs, réalisé par une réduction de l'épaisseur de paroi du tirant de chaîne (40) dans les zones concernées, les boulons (20, 22) ne débordent pas au-delà des surfaces extérieures des tirants de chaîne (40).

2. Chaîne de poussée (2) selon la revendication 1, les boulons (20, 22) étant logés de manière immobile du fait d'un ajustement serré dans les trous récepteurs de boulons (42, 44) des tirants de chaîne (40).

3. Chaîne de poussée (2) selon l'une quelconque des revendications précédentes, les boulons (20, 22) étant logés de manière mobile en rotation du fait d'un ajustement avec jeu dans les trous récepteurs de boulons (16, 18) des disques (4) à segments dentés de la partie intermédiaire (56).

4. Chaîne de poussée selon l'une quelconque des revendications précédentes, les boulons (20, 22) étant logés de manière mobile en rotation du fait d'un ajustement à jeu ou de manière immobile du fait d'un ajustement serré dans les trous récepteurs de boulons (16, 18) des disques (4) à segments dentés de la partie intérieure (54).

5. Chaîne de poussée (2) selon l'une quelconque des revendications précédentes, tous les disques (4) à segments dentés possédant la même forme.

6. Chaîne de poussée (2) selon la revendication 5, la forme et le placement des disques à segments dentés (4) étant sélectionnés de telle sorte que, lorsque la chaîne de poussée (2) est étirée, deux disques (4) à segments dentés situés côte à côte dans un même plan constituent une butée finale et ainsi une protection contre l'hyperextension de la chaîne de poussée (2).

7. Chaîne de poussée (2) selon la revendication 5 ou 6, le disque à segments dentés (4) respectif comportant une partie marginale (6) rectiligne s'étendant dans la direction longitudinale de la chaîne de poussée (2) et à son vis-à-vis, une partie marginale (8) de forme courbe, hors de laquelle des dents (10, 12, 14) débordent de manière divergente vers l'extérieur.

8. Chaîne de poussée (2) selon l'une quelconque des revendications 5 à 7, la roue à segments dentés (4) respective comportant sur l'une de ses deux parties frontales une saillie (32) débordant latéralement et sur l'autre face frontale, un creux (34) de forme complémentaire.

9. Chaîne de poussée (2) selon l'une quelconque des revendications 5 à 8, le disque à segments dentés (4) respectif ne comportant aucun élément saillant ou débordant hors du plan du disque.

10. Chaîne de poussée (2) selon l'une quelconque des revendications précédentes, tous les tirants de chaîne (40) possédant la même forme.

11. Chaîne de poussée (2) selon la revendication 10, la forme et le placement des tirants de chaîne (40) étant sélectionnés de telle sorte que lorsque la chaîne de poussée est étirée, deux tirants de chaîne (40) situés côte à côte dans un même plan constituent une butée finale et ainsi une protection contre la surextension de la chaîne de poussée (2).

12. Chaîne de poussée (2) selon la revendication 10 ou 11, le tirant de chaîne (40) respectif étant conçu en forme de disque et ne comportant aucun élément saillant ou débordant hors du plan du disque.

13. Chaîne de poussée (2) selon l'une quelconque des revendications précédentes, considérés dans la direction longitudinale de la chaîne de poussée (2), les disques (4) à segments dentés de la partie intérieure (54) étant placés à la même position que les tirants de chaîne (40).

14. Chaîne de poussée (2) selon l'une quelconque des revendications précédentes, considérés dans la direction longitudinale de la chaîne de poussée (2), les disques (4) à segments dentés de la partie intermédiaire (56) étant placés en étant déplacés de la valeur d'une demi-longueur d'un disque à segments dentés (4) par rapport aux disques (4) à segments dentés de la partie intérieure (54).

15. Transmission par chaîne, dotée d'une chaîne de poussée (2) selon l'une quelconque des revendications précédentes, laquelle comporte un moteur électrique (72) qui entraîne un pignon droit (60) s'engrenant dans des dents (10, 12, 14) des disques (4) à segments dentés de la partie intérieure (54), le pignon droit (60) étant placé dans une partie de renvoi sur le rayon extérieur de la chaîne de poussée (2).
